(19) **Europäisches Patentamt**

**European Patent Office**

**Office européen des brevets**

(11) **EP 1 041 513 A1**

(12) **EUROPEAN PATENT APPLICATION**
published in accordance with Art. 158(3) EPC

(43) Date of publication:
04.10.2000 Bulletin 2000/40

(51) Int. Cl.⁷: **G06T 7/00**

(21) Application number: 98961612.3

(86) International application number:
**PCT/JP98/05969**

(22) Date of filing: 25.12.1998

(87) International publication number:
**WO 99/34329 (08.07.1999 Gazette 1999/27)**

(84) Designated Contracting States:
**DE FR GB IT**

(30) Priority: 26.12.1997 JP 36676397

(71) Applicant:
**Cyber SIGN Japan Incorporated
Tokyo 154-0015 (JP)**

(72) Inventor:
**CHAI, Toshiaki,
Cyber SIGN Japan Incorporated
Tokyo 154-0015 (JP)**

(74) Representative:
**Albrecht, Thomas, Dr.
Kraus, Weisert & Partner
Patent- und Rechtsanwälte
Thomas-Wimmer-Ring 15
80539 München (DE)**

(54) **IC CARD AUTHENTICATING METHOD AND DEVICE**

(57)     An IC card on which registration signature data are recorded is used for a signature authenticating system. For dissimilarity of verification signature data, there are provided three ranks defined by a first parameter and a second parameter greater than the first parameter. If the measured dissimilarity falls within the rank below the first parameter, the signature is authenticated; if the measured dissimilarity falls within the second rank above the first parameter and below the second parameter, re-signature is ordered, and authentication is denied after a specified number of re-signatures each yield a similar result; and if the measured dissimilarity falls within the rank above the second parameter, authentication is denied.

**FIG.3**

**Description**

TECHNICAL FIELD

The present invention relates to a method and device for authenticating a user of an IC card. More particularly, the present invention relates to a method and device for preventing illegal use of an IC card, which could otherwise be performed through copying of signature data which are used in authentication of the user of an IC card by use of an electronic signature.

BACKGROUND ART

A variety of methods are used for authentication of individuals (hereinafter referred to as "personal authentication"). In public offices in Japan, personal seals are mainly used for personal authentication. However, means for personal authentication other than personal seals have recently come into acceptance.

As computer communications have come into widespread use and been popularized, problems have arisen in relation to secrecy. Personal authentication is used as one measure for securing secrecy. A principal technique used for personal authentication is use of a password. However, sole use of such a method is not necessarily sufficient for securing secrecy. Therefore, personal authentication by use of biometrics has recently attracted a great deal of attention as a method for identifying an individual.

Biometrics utilizes biological characteristics such as those of the subject's iris, DNA, voiceprint, or fingerprints. Handwriting is also considered to fall under the category of biological characteristics. Personal authentication by means of biometrics is advantageous because problems involved in use of personal seals, such as loss or theft, are eliminated. However, for the purpose of authenticating the user of a card, at the present time use of biological characteristics other than handwriting is not practical, in view of technical and economical considerations.

Personal authentication is important in the case of cards such as bank cards and credit cards, because the user of a card must be confirmed to be the holder (i.e., the person to whom the card has been issued). However, at present, importance is placed on confirmation of the financial status of a person, and personal authentication is generally not performed

A terminal that accepts cards is connected via a network to a host computer of a financial institution. The balance held by the financial institution, presence/absence of a report of a missing card, credit standing, etc. are checked by the host computer, and on the basis of the results, transactions such as issuance of cash and lending of money are performed.

At present, use of magnetic cards is prevalent, and in many cases personal authentication is performed by use of a password. Also, there has been proposed use of IC cards in place of magnetic cards in order to strictly check for illegal use of a card, which could be performed through illegal copying of a card or forgery of a signature.

Information on a card is processed by computer, regardless of whether the card is a magnetic card or an IC card. Whereas authentication of the user of a cash card issued by a bank is mainly performed by use of a password, in the case of a credit card, a signature is used for personal authentication.

Authentication of the user of an IC card on the basis of handwriting is performed as follows. Handwriting (a signature in ordinary cases) is registered in an IC card, and a signature produced by the user of the card at the time of use is collated with the registered handwriting or signature. Such authentication of the user of an IC card on the basis of a handwritten signature inevitably involves fear of signature data being illegally copied and used.

For example, an employee at a shop that accepts IC cards may alter a signature data collator in order to illegally copy data of a signature made by the holder of an IC card and may illegally issue an invoice to a credit company by use of the copied signature data. Although such illegal copying and use of signature data requires large-scale alteration, such illegal conduct is somewhat likely to occur.

Handwriting has an advantage of being difficult for other persons to imitate. In addition, handwritten signatures depend on the individual's characteristics, and a person is very unlikely forget how to make his/her signature. However, if handwriting is examined by the naked eye, the examiner must have a great deal of experience, and the results of the examination depend on the power of observation of the examiner. As has been described in relation to prior art techniques, in Japan, personal authentication by use of a handwritten signature performed for use of a credit card is superficial and is a long way from constituting true personal authentication by use of a signature.

Because of the above-described reasons, automation is essential for realizing reliable personal authentication by use of a handwritten signature, without involving dependence on the individual skills of the examiner. Personal authentication by use of a handwritten signature is relatively immune from forgery, because an individual's signature reflects his/her personal characteristics. However, handwriting varies from signature to signature, depending on the mental condition of the signer, the environment where the signer signs his/her name, and other factors. Therefore, when personal authentication is automated, the above-described characteristics must be taken into consideration in order to achieve stable verification results. Also, the fact that handwriting changes with time must be taken into consideration in personal authentication by use of a handwritten signature.

An object of the present invention is to develop a method which enables automated authentication of the user of an IC card. Automatic verification of handwriting involves problems with regard to how to set criteria for authentication of a true person and exclusion of other persons; which information is to be stored in an IC card, which is a storage medium of limited capacity; and how the information is to be stored. Particularly, there arises a problem such that when the rate of exclusion of other persons is increased, the possibility of a true person being judged to be another person increases, and when the rate of authentication of a true person is increased, the possibility of a signature being imitated by another person increases. The present invention provides a method for solving these problems.

DISCLOSURE OF THE INVENTION

In order to solve the above-described problems, the present invention utilizes an IC card and an electronic signature. A user is requested to sign on an electronic tablet by use of an electronic pen, and on the basis of the signature, a judgment is made as to whether the user is the holder (proprietor) of the IC card. The method will be described below. In the following description, signature data used as a reference for verification will be referred to as "registration signature data," and signature data to be verified will be referred to as "verification signature data."

In the present invention, an IC card which is used in combination with signature authentication and on which registration signature data are recorded is authenticated as follows.

(1) For degree of difference (dissimilarity) between registration signature data and verification signature data, there are set three ranks defined by a first parameter and a second parameter greater than the first parameter.
(2) The degree of difference between the verification signature data and the registration signature data stored in the IC card is measured.
(3) If the measured degree of difference falls within the rank below the first parameter, authenticated is given; if the measured degree of difference falls within the second rank above the first parameter and below the second parameter. re-signature is requested, and authentication is denied after a specified number of re-signatures have yielded the same result; and if the measured degree of difference falls within the rank above the second parameter, authentication is denied.

Although a variety of methods may be used for signature verification, a method utilizing signature data composed of time-series data of coordinates of character handwriting and writing pressure can improve the reliability of the authentication. Although the present invention will be described on the basis of the method utilizing signature data composed of time-series data of coordinates of character handwriting and writing pressure, the present invention is not limited thereto. In a conceivable case in which the first parameter coincides with the second parameter, re-signature is not requested. Re-signature may become unnecessary depending on the purpose.

When a person has obtained an IC card and thereby becomes a holder, the holder first registers into the IC card signature data that serve as a basis for signature verification. This procedure is performed as follows. First, the person who is to become the holder of the card signs his/her name a plurality of times on an electronic tablet by use of an electronic pen, in order to create a plurality of signature data sets. From the signature data sets, characteristics that are peculiar to the person and are required for authentication are extracted to thereby create registration signature data, which are then stored in the IC card. The thus-created registration signature data contain, as time-series data, shape information (x and y coordinates of handwriting) and writing pressure information (writing pressure p coordinate).

When the IC card is used, on a computer, data of a signature that the user produces at the site where the card is used is collated with the registration signature data stored in the IC card in order to check whether the user is the holder of the IC card.

Two types of errors occur in the course of the verification operation. One is an error in which a true person (the holder of the IC card) is judged to be another person, and the other is an error in which a person other than the true person is judged to be the true person. Conventional techniques cause errors of the former type at a high rate, because an excessive degree of importance has been placed on strictness, and excessive attention has been paid to errors of the latter type. Particularly, in the case of Japanese people, who are generally not accustomed to producing signatures, errors of the former type may occur at a high rate. Additionally, differences exist between individuals. Therefore, when authentication by use of signatures becomes common and mechanical verification comes into more widespread use, the error of the former type may cause a state of confusion. In order to solve this problem, the present invention employs a gray zone.

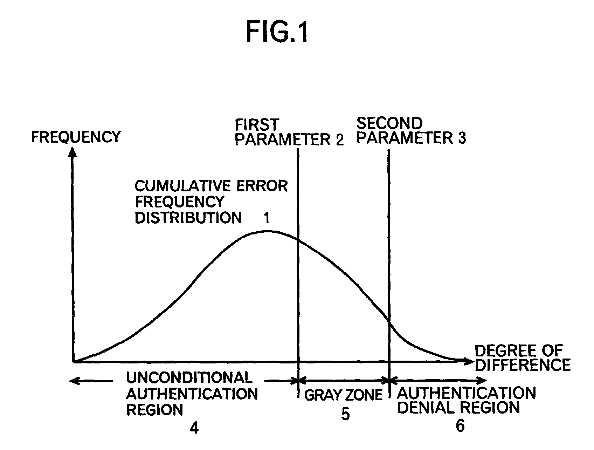

In order to determine a gray zone, two parameters shown in FIG. 1 are prepared. FIG. 1 shows a frequency distribution 1 of cumulative errors (frequency distribution of differences) of ordinary registration signature data. The verification rate (the probability of the signer being a true person) increases toward the left side of the graph, and decreases toward the right side of the graph. The difficult problem is setting a range in which a signer is judged to be a true person. In the present invention, the entire region is not divided into two regions; i.e., a region in which the signer is judged to be a true person and a region in which the signer is judged not to be a true person, but rather is divided to have a buffer region to thereby increase the verification rate and to reliably exclude other persons. Specifically, the following method is employed.

Here, it is assumed that the sum of differences (errors) between elements of registration signatue data A and corresponding elements of verification signature data B is represented by a degree of difference D. In the conventional technique, when D is not greater than a predetermined threshold, the verification signature is authenticated, and in other cases, the verification signature is not authenticated.

In the method of the present invention, judgment as to whether a signer is the holder of an IC card is made by use of three regions separated from one another by two lines corresponding to the above-described two parameters. When the value of D falls within the region (unconditional authentication region 4) located on the left side of the line corresponding to the first parameter in FIG. 1, the signer is unconditionally authenticated to be the holder of the IC card. When the value of D falls within the region (authentication denial region 6) located on the right side of the line corresponding to the second parameter, authentication of the signer as the holder of the IC card is unconditionally denied. When the value of D falls within the region (gray zone 5) between the line corresponding to the first parameter and the line corresponding to the second parameter, the signer is requested to sign again, because authentication of the signer as the holder of the IC card cannot be unconditionally effected or denied.

When the value of D of verification signature data obtained through re-signing falls within the unconditional authentication region 4, the signer is authenticated unconditionally. When the value of D of verification signature data obtained through re-signing falls within the authentication denial region 6, authentication of the signer is denied. When the D value falls within the gray zone 5 again, the signer is not authenticated (to be the holder of the IC card). The number of re-signing operations varies depending on a particular status under which authentication is performed and values of the parameters. However, basically, authentication is ultimately denied when the D value falls within the gray zone 5 in each of a designated number of re-signing operations.

Although the manner of handling the gray zone is not limited to the above-described rule, the important feature of the present invention resides in that the first parameter defines a border for excluding other persons; the second parameter defines a border for excluding the true person; and the gray zone serves as a region in which authentication of the signer as the holder of the IC card cannot be effected or denied, and therefore verification is performed again. This increases the rate at which the true person is accepted and the rate at which other persons are excluded.

When the signer is authenticated as the result of the above-described verification test, his or her personal information is requested, by means of computer communications, from the company (in ordinary cases, a financial institution such as a credit company) which issued the IC card, and his or her financial status is requested as well. When the financial status obtained from the financial institution is judged to be favorable, use of the IC card is permitted, and in other cases, use of the IC card is denied. The above-described procedure realizes the operation for confirming whether the signer is the true person and for checking his/her financial status.

In order to realize the above-described method, an IC card verification apparatus (basically, a handwritten character recognition apparatus) is provided as hardware at a site where IC cards are accepted. The card verification apparatus comprises an IC card reader/writer and a software program for realizing the method of the present invention. A communication interface (I/F) is attached to the IC card verification apparatus. For a user who has passed a verification test, the IC card verification apparatus requests, via a computer network, that a financial institution such as a credit company check the financial status of the user. After having passed the check, the user is allowed to effect a transaction. All personal data, such as registration signature data, which are necessary for signature verification are registered in the IC card.

BRIEF DESCRIPTION OF THE DRAWINGS

FIG. 1 is a graph used for describing a frequency distribution of cumulative errors and a gray zone used in an embodiment of the present invention;

FIG. 2 is a view of a hardware structure according to an embodiment of the present invention, which is required when authentication of the user of an IC card is performed by means of verification of handwritten characters;

FIG. 3 is a flowchart showing an algorithm for authenticating the user of an IC card by means of a handwritten signature;

FIG. 4 is an explanatory diagram showing the relationship between signature characteristics (cumulative error frequency distribution) of each person and a threshold value, used in the embodiment of the present invention;

FIG. 5 is a graph used for describing the importance of a gray zone by use of a cumulative error frequency distribution of a true person and a cumulative error frequency distribution of a person other than the true person; and

FIG. 6 is an explanatory diagram showing a method of isolating characters from writing pressure information, used in the embodiment of the present invention.

BEST MODE FOR CARRYING OUT THE INVENTION

The procedure for authenticating the user of an IC card will be described with reference to FIG. 1, which shows the hardware structure of the card verification apparatus. In the following example, it is assumed that the user of the IC card is a customer; the person who performs authentication is a clerk at a shop that accepts IC cards; the issuer of the IC card is a credit company; and the customer makes a payment for purchased goods by use of a credit card (IC card).

First, the clerk causes an IC card input/output device (IC card reader/writer) 8 to read an IC card 7 presented by the customer. Information read from the IC card 7 is stored in a work area 22 via an IC card I/F 14. Simultaneously, a message "Request Signature" is displayed on a display device 11 via a display I/F 23. According to this message, the clerk requests the customer to sign his/her name.

The customer signs on an electronic tablet 9 by use of an electronic pen 10. The thus-obtained signature data set is sent to the work area 22 via a tablet I/F 13 and is temporarily stored therein. The data read from the IC card include registration signature data and historical signature data. First, the verification signature data set is collated with the registration signature data. When the user of the IC card has passed such an authentication test, this fact is displayed on the display device 11. At the same time, customer information is transmitted to the credit company via a communication port 16 in order to inquire about the reliability, etc., of the customer. When a reply indicating "no problem" is returned, the transaction is effected.

The above-described sequence of processing steps are for the case of authentication being effected smoothly. When the D value of verification signature data falls within the gray zone, the clerk requests the customer to sign again. When the D value of verification signature data obtained through the re-signing operation falls within the authentication region, the customer is authenticated. However, the customer is not authenticated when the D value again falls within the gray tone or falls within the authentication denial region. If the financial status reported by the credit company fails to meet a required level, transaction by use of the IC card is rejected even when the customer has passed the authentication test.

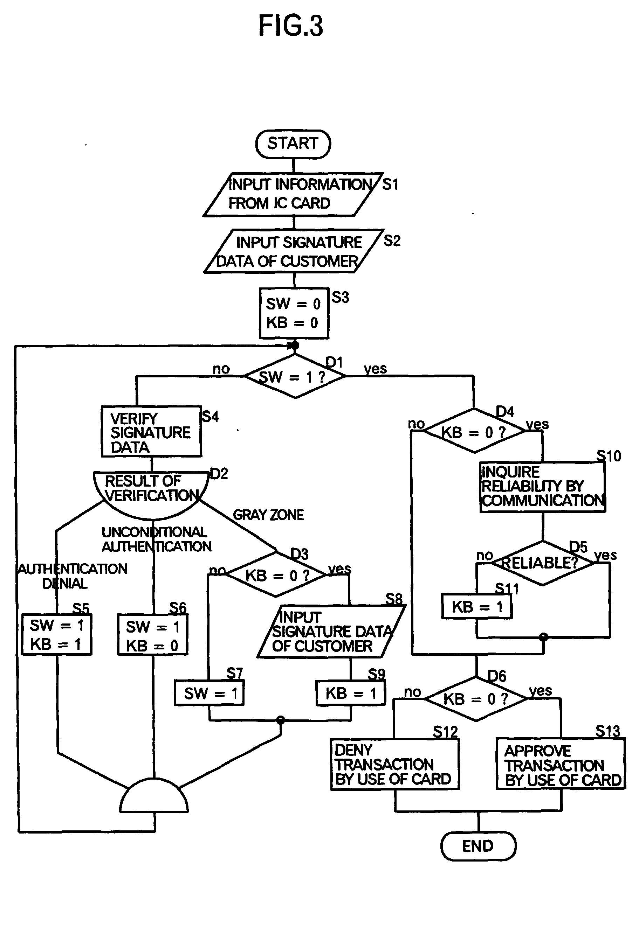

FIG. 3 is a flowchart showing the above-described processing. It is to be noted that the flowchart mainly shows the processing performed by a computer. In FIG. 3. reference symbol "Dn" represents judgment; in particular, D2 represents judgment performed by use of three regions. Although flags SW and KB are each used as a switch, when the flag KB is replaced with a counter, re-signing for the gray zone can be requested a plurality of times. In this case, the program must be modified as follows:

Judgment D3:    IF KB<KBMAX THEN (processings S8 and S9)
                ELSE (processing S7)
Processing S9:    KB-KB+1
                IF  KB=KBMAX  THEN SW-1

where KBMAX represents a number of re-signing operations permitted.

In the example of FIG. 3, the signer is permitted to perform re-signing only once ( KBMAX=1 ); and when the D values of the two signatures both fall within the gray zone, transaction is denied ( KB=1 ). In other words, when neither of the two signatures has a D value which falls within the unconditional authentication region, the customer is not acknowledged to be the holder of the IC card.

Data which are obtained at steps S2 and S8 at which the customer inputs signature data are time-series data including writing-pressure information. That is, set P of the signature data is represented as follows:

$$P = \{x_t, y_t, p_t\}$$

where $t = 1, 2, \ldots, n$. $x_t$ represents an X coordinate at time t, $y_t$ represents a Y coordinate at time t, and $p_t$ represents a writing pressure at time t.

When an electronic pen and tablet of an electromagnetic induction type are used, the position of the electronic pen is recorded even when the pen is in the air (when the electronic pen is not in contact with the electronic tablet, or $p_t = 0$). However, since an electronic pen and tablet of a pressure-sensitive type are in general use, when the electronic pen is separated from the electronic tablet, the coordinate values become constant (constant x and y coordinate values, $p_t = 0$). Verification of signature data at S4 is performed through DP matching between registration signature data A and verification signature data B. Next, an example method for creating registration signature data and for performing signature verification will be described.

Since registration signature data and verification signature data are normalized, no restriction is imposed on the size of characters and the direction of writing. Further, a plurality sets of signature data are averaged in order to obtain registration signature data (of an averaged writing pattern), and the thus-obtained registration signature data are registered in the IC card. Therefore, the registration signature data reflect condensed (handwriting) characteristics of an individual, whereby stable verification is enabled. Specifically, the registration of the registration signature data is performed as follows.

When the customer (the holder of the IC card) registers registration signature data, the customer signs a plurality of times in order to create a plurality of signature data sets. Some of the signature data sets are selected and averaged in order to create a registration signature data candidate. This registration signature data candidate is collated with each signature data set. When each signature data set has a coincidence rate greater than a predetermined level, the registration signature data candidate is registered in the IC card as proper registration signature data.

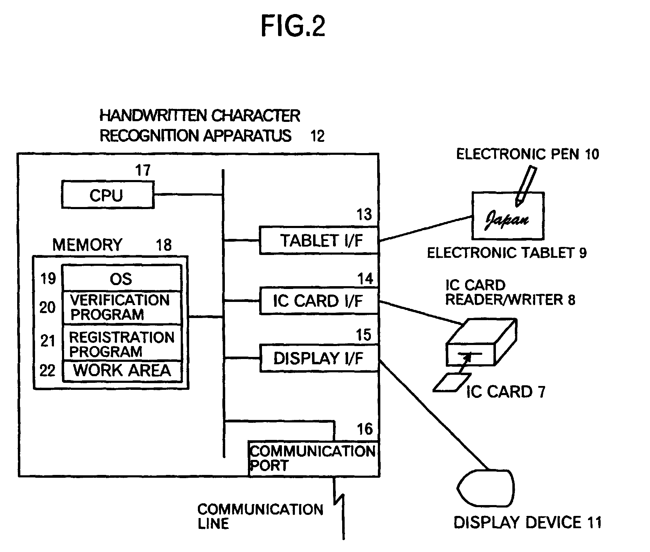

At this time, by the action of the registration/update program 21 shown in FIG. 2, the registration signature data are sent to the IC card reader/writer 8 to be written into the IC card 7. Also, a verification program 20 creates registration signature data at the time of initial registration and processes signature data obtained from a signature written on the electronic tablet 9 by use of the electronic pen 10. For a person whose signature is always stable, the signature registration processing typically ends at this stage.

When there exists a signature whose coincidence rate is lower than a passing level, the customer is requested to sign m additional times. At this stage, (n+m) sets of signature data are present, including the previously input signature data sets. First, one of the signature data sets is selected and collated with other signatures. This processing is performed for all signatures, and a plurality of signatures having the highest coincidence rates are selected (specifically, a plurality of signatures are selected in descending order of coincidence rate) and are averaged in order to create a registration signature data candidate. Further, the registration signature data candidate is collated with other signature data sets, and signature data sets which have passed a verification test are selected. Subsequently, the registration signature data candidate and the selected signature data sets are averaged in order to create registration signature data, which are then registered in the IC card.

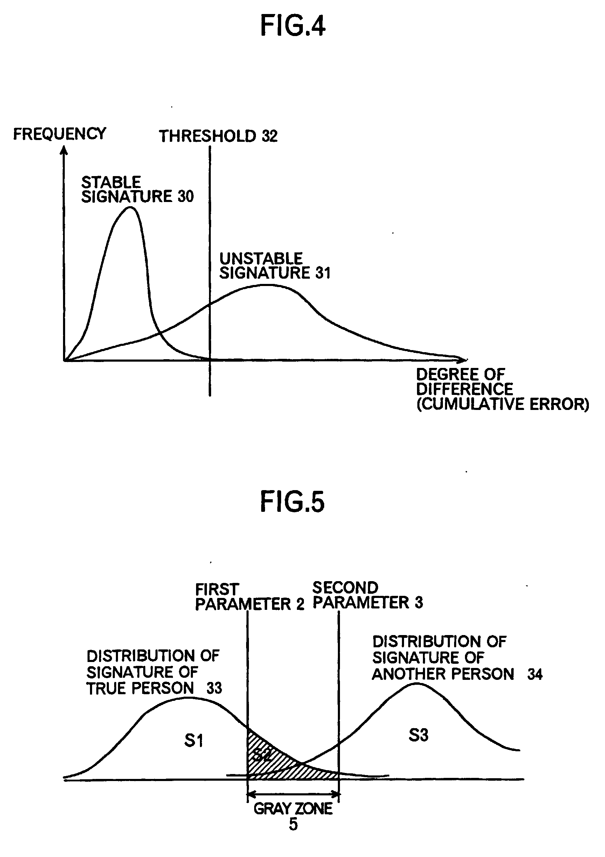

As is apparent from the above description, as shown in FIG. 4, the frequency distribution of cumulative errors between registration signature data and verification signature data varies between a person who can sign stably and a person who cannot sign Stably. Reference numeral 30 denotes a frequency distribution of cumulative errors of a person who can sign stably, and reference numeral 31 denotes a frequency distribution of cumulative errors of a person who cannot sign stably. If judgment for authentication is performed by use of an absolute threshold as in prior art techniques (e.g., a threshold value 32 in FIG. 4), a signature of a person who cannot sign stably is rarely judged to be made by that person. In order to increase the verification (authentication) rate, the threshold value 32 may be increased, which, however, results in an increased possibility of judging as the true person a person who imitates the signature of the true person.

In order to solve this problem, as shown in FIG. 1, the second parameter is set in consideration of characteristics of the individual. When an unconditional authentication region is set for each individual such that the unconditional authentication region accounts for 80 or 90% of the entire region of the frequency distribution, an individual is recognized as a true person at a rate of 80 or 90%. However, even in this case, the Judgment performed for determining whether or not a signer is a true person is affected by the parameter. For example, when the parameter value is increased in order to increase the verification rate, the possibility of a signature being successfully imitated by another person increases. In contrast, when the parameter value is decreased, the verification rate decreases, although the possibility of a signature being successfully imitated by another person decreases. This dilemma is solved by the method of the present invention, which employs first and second parameters to define a gray zone.

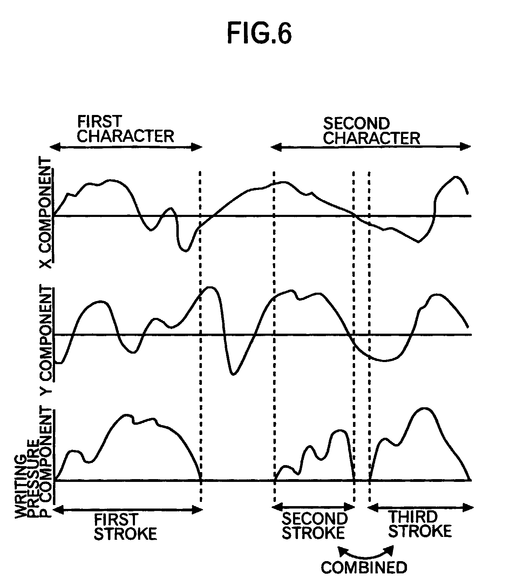

FIG. 5 shows a cumulative error frequency distribution 33 of signatures of a true person, and a cumulative error frequency distribution 34 of signatures which a person other than the true person made while imitating the signature of the true person. As is understood from FIG. 5, the first parameter 2 is used to exclude other persons, and the second parameter 3 is used to exclude the true person. When the area of the gray zone of the distribution 33 is represented by $S_2$, and the area of the unconditional authentication region is represented by $S_1$, a probability r of the cumulative error D of a signature falling within the gray zone can be obtained as follows:

$$r = S1/(S1 + S2).$$

Therefore, the probability of both the D values of two successively input signatures falling within the gray zone is $r^2$.

For example, when

$$S1 + S2 = 1,$$

$$S1 = 0.25 \ (= 25\%),$$

$$r^2 = 0.0625 \ (= \text{about } 6\%).$$

This value of probability means that only one of about 10 and several signatures of a true person is not recognized as being signed by the true person, due to presence of the gray zone.

When the true person signs again, the probability $r^3$ of all the D values of three successively input signatures falling within the gray zone is represented as follows.

$$r^3 = 0.015625 \ (= \text{about } 1.5\%).$$

This value of probability means that only one of about 60 and several signatures of a true person is not recognized as being signed by the true person, due to presence of the gray zone.

Meanwhile, in the case of a skillful person other than the true person imitating the signature of the true person,

$$r^2 = 0.01 \ (= 1\%)$$

$$r^3 = 0.001 \ (= 0.1\%)$$

when it is assumed that S1+S3 = 1 , and S1 = 0.1 (10%).

That is, due to the presence of the gray zone, failure to exclude the person who imitates the signature of the true person occurs at a rate of 1/100 or 1/1000. However, in a system, such as that of the present invention, in which handwriting is examined on the basis of time-series data which contain not only shape information (position coordinates) but also writing-pressure information, it is almost impossible for another person to imitate the signature of the true person with such a similarity that the D value falls within the gray zone with a probability of r = 25%. In the present invention, in most cases other persons are excluded by the first parameter.

Although the cumulative error D (sum of normalized degrees of difference) may be obtained in any manner, the present invention used the following equations for calculation of the cumulative error D. Equation 1 represents the degree of difference between the m-th character of registration signature data A and the corresponding character of verification signature data set B.

$$d_s^{\,2}(m) = \frac{\displaystyle\sum_{k=Ls(m)}^{Le(m)} \left\{ (1-w_p)\cdot\left| z^{\cdot}{}_A(k) - z^{\cdot}{}_B(\tau(k)) \right|^2 + w_p \cdot \left| p^{\cdot}{}_A(k) - p^{\cdot}{}_B(\tau(k)) \right|^2 \right\}}{Le(m) - Ls(m) + 1} \qquad \text{Eq. 1}$$

Equation 2 represents the overall degree of difference of the signature; i.e., a normalized degree of difference obtained through a calculation in which the sum of the degrees of difference for the respective characters is divided by the total number of data points in the characters.

$$D(A,B) = \frac{\displaystyle\sum_{k=1}^{M} d_s(m)\cdot(Le(m) - Ls(m) + 1)}{\displaystyle\sum_{k=1}^{M}(Le(m) - Ls(m) + 1)} \qquad \text{Eq. 2}$$

where $L_s(m)$, $L_e(m)$ respectively represent the start and end points of the m-th character, M represents the number of characters, $w_P$ represents a weighting coefficient, $\tau(k)$ represents a skew function at the k-th sample point of the m-th character, and z* and p* respectively represent normalized positional coordinates and a normalized writing pressure coordinate. The coefficient $w_P$ satisfies the following relation:

$$0 \le w_P \le 1.$$

Through adjustment of this coefficient, the effect of writing-pressure information on authentication judgment is varied.

Further, z* represents the following complex coordinates:

$$z^* = x^* + iy^*$$

i = SQRT(-1) (the square root of -1).

The skew function $\tau$ is a function for minimizing the cumulative error of handwritten signature data. The positional coordinates and writing pressure coordinate of the signature data B corrected by use of this function are $z^*_B(\tau(k))$ and $p^*_B(\tau(k))$. In other words, the cumulative error can be minimized through selection of a coordinate point $((z^*_B(\tau(k)), p^*_B(\tau(k)))$ of the signature data B that corresponds to a coordinate point $\{(z^*_A(\tau(k)), p^*_A(\tau(k))\}$ of the signature data A.

The number of characters can be obtained from the writing-pressure information, an example of which is shown in FIG. 6. As shown in FIG. 6, characters are separated from one another while a portion where the writing pressure P becomes zero is used as a separation point. However, when the distance between adjacent strokes (e.g., second and third strokes of the second character) is less than a predetermined value, the two strokes are regarded as belonging to a single character. The start and end points of each section obtained through separation of characters are $L_s$ and $L_e$, respectively, and coordinates (including the pressure component) are provided for each section. It is to be noted that the concept of "gray zone" of the present invention can be applied regardless of the manner in which the cumulative error D is obtained.

INDUSTRIAL APPLICABILITY

Personal authentication on the basis of handwritten signatures cannot distinguish other persons from a true person at a probability of 100%, because a person cannot write characters in exactly the same handwriting. Viewed from a different angle, this means that the possibility that another person succeeds in imitating the signature of the true person is extremely low. This is an inherent advantage of handwritten signatures. However, there is a possibility that a true person is not recognized as the true person.

When judgment criteria are relaxed in order to increase verification rate, other persons who imitate a signature of a true person cannot be excluded. On the other hand, when judgment criteria are rendered stricter in order to prevent the signature of the true person from being imitated, the possibility of the true person being excluded as another person increases. These conflicting requirements have hindered mechanical verification.

The method of authenticating the holder of an IC card according to the present invention solves the dilemma through employment of a gray zone. For a frequency distribution of cumulative errors, a first parameter for excluding other persons and a second parameter for excluding a true person are set in order to define a gray zone, thereby solving the dilemma, which the prior art techniques could not solve. Thus, the present invention enables a true person to be distinguished from other persons with high probability.

This is because when signing is repeated, the error approaches the center of the error distribution or the peak of the graph shown in FIG. 1. This means the following. That is, in the case in which a person other than a true person imitates the signature of the true person, the possibility of the error (degree of difference) falling within the gray zone is very high, even when the other person is skillful; and when the other person repeatedly signs, two or three times, the possibility of the error falling outside the line corresponding to the second parameter (falling within the authentication denial region) becomes extremely high. By contrast, in the case of the true person, the possibility of the error falling outside the line corresponding to the first parameter (falling within the unconditional authentication region) becomes extremely high. Accordingly, the true person is recognized as a true person, and other persons are recognized as other persons.

In the concept of a gray zone of the present invention, two parameters absorb differences between a person who is skilled at signing (a person which is experienced in signing and which can sign stably) and a person who is not skilled at signing (a person which is not experienced in signing and which cannot sign stably), and the gray zone can be selectively used in accordance with characteristics of the individual. Therefore, authentication can be performed in consideration of actual conditions.

Further, since all personal data are stored in an IC card, the handwritten signature recognition apparatus is required neither to store personal data therein nor to obtain personal data in relation to handwritten signatures by means of communications. Since personal data in relation to handwritten signatures cannot be retrieved from sources other than the IC card, the holder of the IC card can prevent abuse of the IC card by other persons, by means of the holder merely holding the IC card. When the holder of the IC card loses the IC card and another person uses the IC card, the another person is strictly checked and is excluded by the authentication method of the present invention. Therefore, even when the IC card is lost, it cannot be used illegally. The above-described effects are derived from the following two features.

(1) Since time-series signature data including writing-pressure information are used as verification data, the possibility of a signature being imitated by other persons is extremely low.

(2) Since the gray zone provides an algorithm for excluding other persons, other persons can be excluded more reliably.

As described above, even when a person other than the holder of the IC card obtains the card illegally, the person cannot use the card, whereby the safety of the IC card is guaranteed. In addition, employment of the gray zone increases the possibility of a true person being judged to be a true person. Further, since the verification is performed mechanically or automatically, stable verification results can be obtained regardless of the ability of a person who examines handwriting.

**Claims**

1. An IC card authenticating method for an IC card which stores registration signature data, the method characterized by comprising:

    (1) setting in advance, for degree of difference between the registration signature data stored in the IC card and verification signature data, three ranks defined by a first parameter and a second parameter greater than the first parameter;
    (2) measuring a degree of difference between the verification signature data and the registration signature data stored in the IC card; and
    (3) authenticating the IC card if the measured degree of difference falls within the rank below the first parameter, requesting re-signature if the measured degree of difference falls within the second rank above the first parameter and below the second parameter, denying authentication after a specified number of re-signatures have yielded the same result, and denying authentication if the measured degree of difference falls within the rank above the second parameter.

2. An IC card authenticating method according to claim 1, wherein the signature data include time-series data of coordinates of character handwriting and writing pressure.

3. An IC card authenticating method according to claim 1 or 2, wherein the first parameter has the same value as that of the second parameter.

4. An IC card authenticating apparatus for an IC card which stores registration signature data, in which three ranks defined by a first parameter and a second parameter greater than the first parameter are set in advance for degree of difference between the registration signature data stored in the IC card and verification signature data, the apparatus comprising:

    (2) means for measuring a degree of difference between the verification signature data and the registration signature data stored in the IC card; and
    (3) means for authenticating the IC card if the measured degree of difference falls within the rank below the first parameter, for requesting re-signature if the measured degree of difference falls within the second rank above the first parameter and below the second parameter, for denying authentication after a specified number of re-signatures have yielded the same result, and for denying authentication if the measured degree of difference falls within the rank above the second parameter.

5. An IC card authenticating apparatus according to claim 4, wherein the signature data include time-series data of coordinates of character handwriting and writing pressure.

6. An IC card authenticating apparatus according to claim 4 or 5, wherein the first parameter has the same value as that of the second parameter.

7. A program recording medium which stores a program for authenticating an IC card which stores registration signature data, the program performing processing steps of:

    (1) setting in advance, for degree of difference between the registration signature data stored in the IC card and verification signature data, three ranks defined by a first parameter and a second parameter greater than the first parameter;

(2) measuring a degree of difference between the verification signature data and the registration signature data stored in the IC card; and

(3) authenticating the IC card if the measured degree of difference falls within the rank below the first parameter, requesting re-signature if the measured degree of difference falls within the second rank above the first parameter and below the second parameter, denying authentication after a specified number of re-signatures have yielded the same result, and denying authentication if the measured degree of difference falls within the rank above the second parameter.

8. A program recording medium according to claim 7, wherein the signature data include time-series data of coordinates of character handwriting and writing pressure.

9. A program recording medium according to claim 7 or 8, wherein the first parameter has the same value as that of the second parameter.

10. An IC card for a signature authentication system, the IC card storing registration signature data Which include time-series data of coordinates of character handwriting and writing pressure.

# FIG.1

FREQUENCY

FIRST
PARAMETER 2

SECOND
PARAMETER 3

CUMULATIVE ERROR
FREQUENCY
DISTRIBUTION    1

DEGREE OF
DIFFERENCE

UNCONDITIONAL
AUTHENTICATION
REGION
4

GRAY ZONE
5

AUTHENTICATION
DENIAL REGION
6

# FIG.2

HANDWRITTEN CHARACTER
RECOGNITION APPARATUS   12

**17**

CPU

MEMORY   18

| 19 | OS |
| 20 | VERIFICATION PROGRAM |
| 21 | REGISTRATION PROGRAM |
| 22 | WORK AREA |

**13**
TABLET I/F

**14**
IC CARD I/F

**15**
DISPLAY I/F

**16**
COMMUNICATION PORT

COMMUNICATION LINE

ELECTRONIC PEN 10

Japan

ELECTRONIC TABLET 9

IC CARD
READER/WRITER 8

IC CARD 7

DISPLAY DEVICE 11

# FIG.3

# FIG.4

FREQUENCY  THRESHOLD 32

STABLE
SIGNATURE 30

UNSTABLE
SIGNATURE 31

DEGREE OF
DIFFERENCE
(CUMULATIVE ERROR)

# FIG.5

FIRST  SECOND
PARAMETER 2  PARAMETER 3

DISTRIBUTION OF
SIGNATURE OF
ANOTHER PERSON 34

DISTRIBUTION OF
SIGNATURE OF
TRUE PERSON 33

S1

S3

GRAY ZONE
5

# FIG.6

# INTERNATIONAL SEARCH REPORT

| International application No. |
|---|
| PCT/JP98/05969 |

**A. CLASSIFICATION OF SUBJECT MATTER**
Int.Cl⁶ G06T7/00

According to International Patent Classification (IPC) or to both national classification and IPC

**B. FIELDS SEARCHED**

Minimum documentation searched (classification system followed by classification symbols)
Int.Cl⁶ G06T7/00

Documentation searched other than minimum documentation to the extent that such documents are included in the fields searched
Jitsuyo Shinan Koho        1940-1998    Toroku Jitsuyo Shinan Koho      1994-1998
Kokai Jitsuyo Shinan Koho   1971-1998

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 3-108018, A (International Business Machines Corp.), 8 May, 1991 (08. 05. 91) & US, 5054088, A | 1-10 |
| Y | JP, 63-245782, A (Omron Tateisi Electronics Co.), 12 October, 1988 (12. 10. 88) (Family: none) | 1-10 |

☐ Further documents are listed in the continuation of Box C.    ☐ See patent family annex.

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 26 March, 1999 (26. 03. 99) | 6 April, 1999 (06. 04. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)